# EUROPEAN PATENT APPLICATION

(11) **EP 1 462 339 A2**
(43) Date of publication of application: **29.09.2004**
(21) Application number: 04006956.9
(22) Date of filing: 23.03.2004
(51) Int. Cl.: B62D 5/04

(54) **Variable gear ratio system**

(30) Priority: 24.03.2003 JP 2003080068
(71) Applicant: TOYODA KOKI KABUSHIKI KAISHA, Kariya-shi Aichi-ken (JP)
(72) Inventor: Sugiyama, Michiyuki, Kariya-shi Aichi-ken (JP)
(74) Representative: Leson, Thomas Johannes Alois, Dipl.-Ing.

(57) **Abstract**

A variable gear ratio system includes an actuator connected to a steering system of an automobile, a sensor for detecting a current angle of the actuator and a controller for executing a feedback control based on the current angle of the actuator and a target angle determined in accordance with an operational state including a steering angle of a steering wheel and a vehicle speed so that an output position of the actuator approach the target angle. The variable gear ratio system varying a steering angle of a vehicle wheel relative to the steering angle of the steering wheel depending on an operational state. A feedback value of the current for feedback control is held at a start of a reverse operation of the steering wheel, from the start of the reverse operation of the steering wheel to a time when the target angle and the current angle correspond to each other and when the actuator inferiorly follows a move of the steering wheel and the steering wheel is operated in reverse.

## Description

### FIELD OF THE INVENTION

The present invention relates to a variable gear ratio system. More particularly, the present invention pertains to a variable gear ratio system for varying a steering angle of vehicle wheels relative to a steering angle of a steering wheel in accordance with operational states.

### BACKGROUND OF THE INVENTION

A known variable gear ratio system described in Japanese Patent Publication No. 3232032 includes an actuator connected to a steering system of an automobile and constructed for a positioning control at a target angle determined by the steering angle of the steering wheel, the vehicle speed, and other operational states.

According to the construction of the known variable gear ratio system described in Japanese Patent Publication No. 3232032, a deviation between a current angle of the actuator and the target angle of the actuator may exceed a reference value because the actuator cannot follow a move of the steering wheel when, for example, the steering wheel is suddenly rotated in one direction. With a known variable gear ratio system, the target angle is offset to correspond to the current angle when the steering wheel is rotated in reverse at the condition that the deviation between the current angle and the target angle of the actuator exceeds the reference value. Thus, the reaction force affecting the steering wheel is suddenly declined to make the operator feel something is wrong with the steering feeling. Moreover, with the construction of the known variable gear ratio system, the vehicle wheels do not return to the straight position when the steering wheel is returned to the zero point (neutral point). In other words, with the construction of the known variable gear ratio system, it is difficult to reduce a gap between the steering angle of the vehicle wheels and the steering angle of the steering wheel when the steering wheel is returned to the zero point (=0).

A need thus exists for a variable gear ratio system which provides more comfortable steering feeling.

### SUMMARY OF THE INVENTION

In light of the foregoing, the present invention provides a variable gear ration system includes an actuator connected to a steering system of an automobile, a sensor for detecting a current angle of the actuator and a controller for executing a feedback control based on the current angle of the actuator and a target angle determined in accordance with a operational state including a steering angle of a steering wheel and a vehicle speed so that a output position of the actuator approach the target angle. The variable gear ration system varying a steering angle of a vehicle wheel relative to the steering angle of the steering wheel depending on a operational state. A feedback value of the current for feedback control is held at a start of a reverse operation of the steering wheel, from the start of the reverse operation of the steering wheel to a timing that the target angle and the current angle correspond each other when the actuator inferiorly follows a move of the steering wheel and the steering wheel is operated in reverse.

According to another aspect of the present invention a variable gear ration system includes an actuator connected to a steering system of an automobile, a sensor for detecting a current angle of the actuator and a controller for executing a position control of the actuator based on a target angle determined in accordance with a operational state including a steering angle of a steering wheel and a vehicle speed so that a output position of the actuator approach the target angle. The variable gear ration system varying a steering angle of a vehicle wheel relative to the steering angle of the steering wheel depending on a operational state. An output torque of the actuator is held at a start of a reverse operation of the steering wheel, from the start of the reverse operation of the steering wheel to a timing that the target angle and the current angle correspond each other when the actuator inferiorly follows a move of the steering wheel and the steering wheel is operated in reverse.

According to further aspect of the present invention, a variable gear ration system includes an actuator connected to a steering system of an automobile, a sensor for detecting a current angle of the actuator and a controller for executing a feedback control based on the current angle of the actuator and a target angle determined in accordance with a operational state including a steering angle of a steering wheel and a vehicle speed so that a output position of the actuator approach the target angle. The variable gear ration system varying a steering angle of a vehicle wheel relative to the steering angle of the steering wheel depending on a operational state. An output of the actuator is locked from the start of the reverse operation of the steering wheel to a timing that the target angle and the current angle correspond each other when the actuator inferiorly follows a move of the steering wheel and the steering wheel is operated in reverse.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements.

Fig. 1 shows a schematic view of a variable gear ratio system according to an embodiment of the present invention.

Fig. 2 shows a flowchart of a main program according to the embodiment of the present invention.

Fig. 3 shows a graph illustrating a transition of a target angle, a target angle for a driving current, and a current angle for the feedback according to the embodiment of the present invention.

### DETAILED DESCRIPTION OF THE INVENTION

One embodiment of the present invention will be explained with reference to the illustrations of the drawing figures as follows.

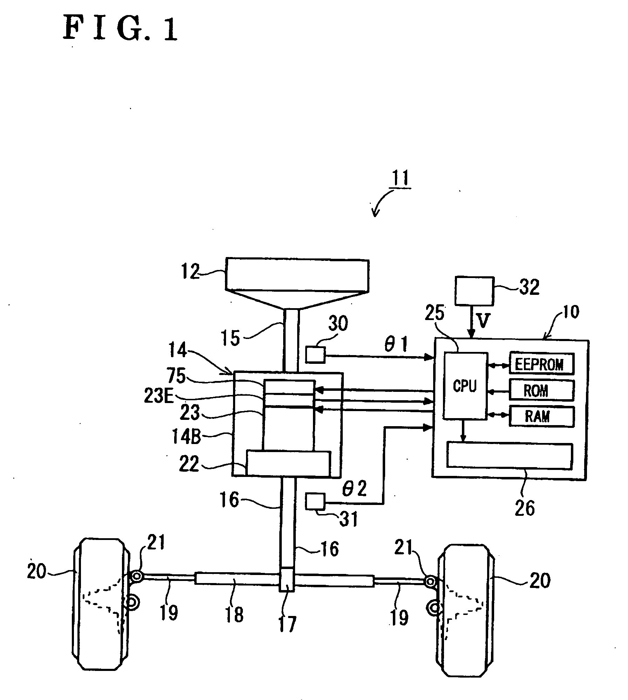

As shown in Fig. 1, a variable gear ratio system 11 includes an actuator 14 including a body 14B. The actuator includes a servomotor 23 including a rotor and a reducer 22 including an input portion and an output portion. The servomotor 23 and the reducer 22 are fixed to the body 14B. The rotor of the servomotor 23 rotates the input portion of the reducer 22 and the rotation is decelerated at the reducer 22 to rotate the output portion of the reducer 22. A mechanical lock 75 is provided at the servomotor 23. The mechanical lock 75 is driven by a solenoid element for switching the rotor to be a locked state at which the rotor cannot rotate and a lock released state at which the rotor rotates.

As shown in Fig. 1, a first end of an input side steering shaft 15 is fixed to the body 14B of the actuator 14. A second end of the input side steering shaft 15 is fixed to a steering wheel 12. Thus, the entire actuator 14 rotates with the steering wheel 12.

A first end of output side steering shaft 16 is fixed to the output portion of the reducer 22 of the actuator 14. The output side steering shaft 16 is positioned coaxially with the input side steering shaft 15. A second end of the output side steering shaft 16 is connected with a pinion gear 17. The pinion gear 17 is geared with a rack 18 extended between vehicle wheels 20, 20. Tie rods 19, 19 are provided at both ends of the rack 18 respectively to be extended therefrom. The respective tie rods 19, 19 are connected to a rotation supporting portion 21 provided at the vehicle wheels 20, 20. Accordingly, the steering angle of the vehicle wheels 20, 20 is varied in accordance with the rotation of the output side steering shaft 16.

A steering angle sensor 30 for the steering wheel is provided approximate to a middle portion of the input side steering shaft 15 for detecting a steering angle 61 of the steering wheel 12. A rotational angle sensor 31 for the output angle of the reducer 22 is provided approximate to a middle portion of the output side steering shaft 16 for detecting a rotational angle (i.e., referred as a current angle θ2 hereafter) of the output portion of the reducer 22 of the actuator 14.

The servomotor 23 including a positional sensor 23E is controlled by an ECU 10. A CPU 25 of the ECU 10 is inputted with an output signal of the positional sensor 23E of the servomotor 23. The CPU 25 is inputted with the operational information such as a vehicle speed V detected by a vehicle speed sensor 32, the steering angle θ1 detected by the steering angle sensor 30, and the current angle θ2 detected by the rotational angle sensor 31, or the like. The CPU 25 calculates a target angle θ3 of the actuator 14 based on the steering angle θ1, the vehicle speed V, or the like, to output the driving current determined based on the deviation between the target angle θ3 and the current angle θ2 to the servomotor 23 of the actuator 14. The CPU 25 sends a signal corresponding to the driving current to a motor drive circuit 26. The motor drive circuit 26 outputs the electric current to the servomotor 23 based on the signal from the CPU 25. Accordingly, the predetermined driving torque corresponding to the target angle θ3 is outputted from the actuator 14.

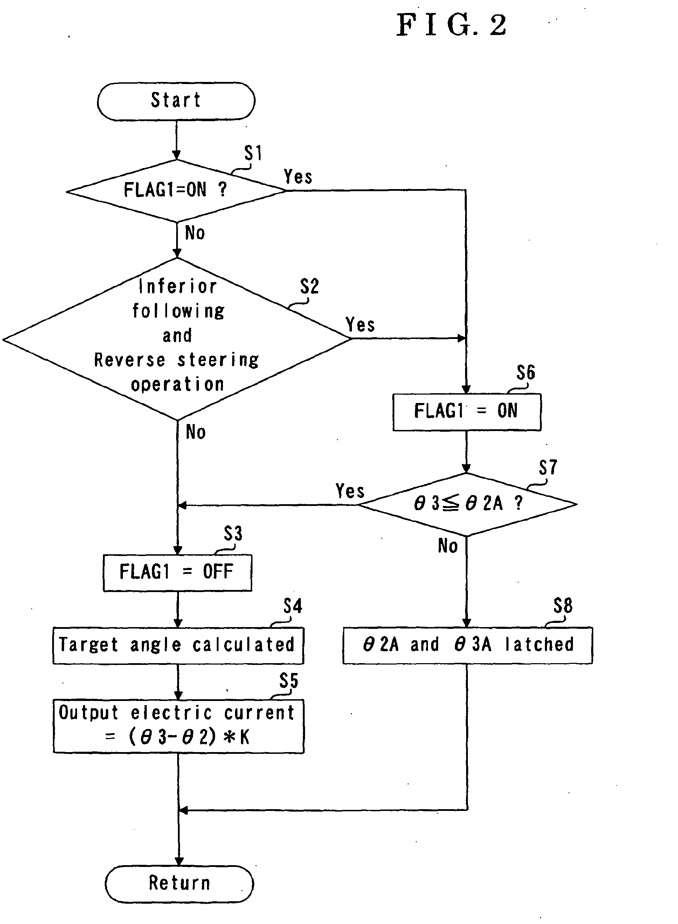

In case the steering wheel 12 is rotated in one direction, the actuator 14 may inferiorly follow a move of the steering wheel 12, when the deviation between the current angle θ2 detected by the rotational angle sensor 31 and the target angle θ3 calculated based on the steering angle θ1, the vehicle speed V, or the like by the CPU 25 exceeds a predetermined reference value. With the construction of the embodiment of the present invention, the CPU 25 runs a main program shown in Fig. 2 with a predetermined cycle for countering the delay of the actuator 14 relative to the steering wheel 12.

In the main program, whether FLAG1 assumes ON is checked (S1). In case FLAG1 is not ON (i.e., NO at S1), whether the steering wheel 12 is operated in reverse at a state, when the actuator 14 inferiorly follows the move of the steering wheel 12, is checked (S2). There, it is judged that the actuator 14 inferiorly follows the move of the steering wheel 12 and the steering wheel 12 is operated in reverse when the deviation between the target angle θ3 calculated based on the steering angle θ1 and the vehicle speed V, or the like by the CPU 25 and the current angle θ2 detected by the rotational angle sensor 31 exceeds the predetermined reference value and when a sign (plus or minus) of the differential value of the steering angle θ1 is changed (i.e., YES at S2). Thereafter, FLAG1 assumes ON (S6).

In the next step, whether the target angle θ3 corresponds to the fed back current angle θ2 (hereafter referred as a current angle θ2A for the feedback) (as well, including the case that the target angle θ3 is smaller than the current angle θ2A for the feedback) is checked at S7. When the target angle θ3 remains larger than the current angle θ2A (i.e., NO at S7), the value of the target angle θ3 used for calculating the driving current of the actuator 14 and the value of the current angle θ2 for the feedback are maintained at the value of the target angle θ3 (i.e., hereafter referred as a target angle θ3A for the driving current) and the current angle θ2A at a timing of the reverse operation of the steering wheel (i.e., S8) to temporarily terminate the main program.

In the meantime, in case it is not judged that the actuator 14 inferiorly follows the move of the steering wheel 12 and the steering wheel 12 is operated in reverse (i,e., NO at S2), FLAG1 assumes OFF (S3). The target angle θ3 of the actuator 14 calculated based on the steering angle θ1, the vehicle speed V, or the like (S4) is adopted. And the driving current determined based on the deviation between the target angle θ3 and the current angle θ2 is outputted to the actuator 14 (i.e., more particularly to the servomotor 23) (S5) to temporarily terminate the main program.

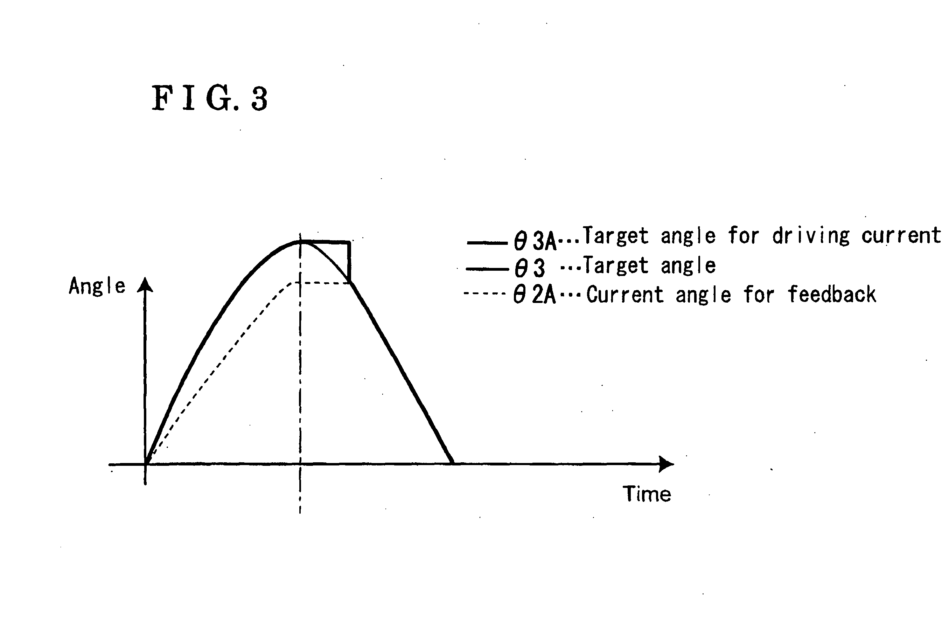

With the main program, the target angle θ3, the target angle θ3A for the driving current, and the current angle θ2A for the feedback vary as shown in Fig. 3. In other words, when the actuator 14 inferiorly follows the move of the steering wheel 12, the target angle θ3A for the driving current and the current angle θ2A for the feedback are maintained at the value of the target angle θ3 and the current angle θ2 at the timing of the reverse operation of the steering wheel, from the start of the reverse operation of the steering wheel to a timing that the target angle θ3 and the current angle 62A for the feedback correspond to each other.

As foregoing, with the variable gear ratio system 11, the reaction force of the steering wheel 12 is maintained by holding the output torque of the actuator 14 determined based on the deviation between the current angle θ2 and the target angle θ3 at the timing of the reverse operation of the steering wheel. After the current angle θ2 and the target angle θ3 correspond to each other, the holding of the target angle θ3 for the driving current and the current angle θ2 for the feedback is released to cancel the delay of the actuator 14 relative to the operation of the steering wheel. Thus, more comfortable steering feeling can be attained and the gap between the steering angle of the vehicle wheels 20, 20 and the steering angle θ1 (= 0) of the steering wheel 12 when the steering wheel 12 returns to the zero point (i.e., neutral point) can be reduced.

Although the both current angle θ2A for the feedback and the target angle θ3A for the driving current are held at the determined at the timing of the reverse operation of the steering wheel when the actuator 14 inferiorly follows the move of the steering wheel in the foregoing embodiment, only the current angle θ2A for the feedback may be held at the determined at the timing of the reverse operation of the steering wheel.

According to the embodiment of the present invention, by holding the feedback value of the current angle for the feedback control determined at the reverse operation of the steering wheel, from the start of the reverse operation of the steering wheel to the timing that the target angle and the current angle correspond to each other, the reaction force applied to the steering wheel can be maintained when the actuator inferiorly follows the move of the steering wheel. In this case, by holding the target angle determined at the start of the reverse operation of the steering wheel along with the feedback value of the current angle, the output torque of the actuator can be maintained at the torque determined at the start of the reverse operation of the steering wheel. Thereafter, the holding of the output torque is released when the target angle and the current angle correspond to each other to cancel the delay of the actuator relative to the operation of the steering wheel. Thus, the comfortable steering feeling can be attained.

In place of the construction for maintain the current angle θ2A for the feed back and target angle θ3A for the driving current, the output torque of the actuator 14 may be held when the actuator 14 inferiorly follows the move of the steering wheel and steering wheel 12 is operated in reverse.

According to the embodiment of the present invention, by holding the output torque of the actuator determined at the timing of the reverse operation of the steering wheel, from the start of the reverse operation of the steering wheel to the timing that the target angle and the current angle correspond to each other when the actuator inferiorly follows the move of the steering wheel, the reaction force applied to the steering wheel can be maintained. After the target angle and the current angle correspond to each other, the holding of the output torque is released to cancel the delay of the actuator relative to the operation of the steering wheel. Thus, the more comfortable steering feel can be attained.

Further, in place of the construction for maintaining the current angle θ2A for the feedback and the target angle θ3A for the driving current, the output of the actuator 14 may be locked when the actuator 14 inferiorly follows the move of the steering wheel and the steering wheel 12 is operated in reverse. In this case, the lock may be a mechanical lock by the mechanical lock 75. The lock may be an electrical lock by the servo lock of the servomotor 23. By locking the output of the actuator, the reaction force from the vehicle wheel is transmitted to the steering wheel to provide the more comfortable steering feeling.

According to the embodiment of the present invention, because the output of the actuator is locked from the start of the reverse operation of the steering wheel to the timing that the target angle and the current angle correspond to each other when the actuator inferiorly follows the move of the steering wheel, the reaction force from the vehicle wheels is transmitted to the steering wheel. After the target angle and the current angle correspond each other, the lock is released to cancel the delay of the actuator relative to the move of the steering wheel. Thus, the more comfortable steering feeling can be attained and the gap between the steering angle of the vehicle wheels and the steering angle of the steering wheel when the steering wheel is returned to the zero point (=0) can be reduced.

The principles, preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.
A variable gear ration system includes an actuator connected to a steering system of an automobile, a sensor for detecting a current angle of the actuator and a controller for executing a feedback control based on the current angle of the actuator and a target angle determined in accordance with a operational state including a steering angle of a steering wheel and a vehicle speed so that a output position of the actuator approach the target angle. The variable gear ration system varying a steering angle of a vehicle wheel relative to the steering angle of the steering wheel depending on a operational state. A feedback value of the current for feedback control is held at a start of a reverse operation of the steering wheel, from the start of the reverse operation of the steering wheel to a timing that the target angle and the current angle correspond each other when the actuator inferiorly follows a move of the steering wheel and the steering wheel is operated in reverse.

## Claims

1. A variable gear ration system comprising:
an actuator connected to a steering system of an automobile;
a sensor for detecting a current angle of the actuator; and
a controller for executing a feedback control based on the current angle of the actuator and a target angle determined in accordance with a operational state including a steering angle of a steering wheel and a vehicle speed so that a output position of the actuator approach the target angle; wherein the variable gear ration system varying a steering angle of a vehicle wheel relative to the steering angle of the steering wheel depending on a operational state; and wherein
a feedback value of the current for feedback control is held at a start of a reverse operation of the steering wheel, from the start of the reverse operation of the steering wheel to a timing that the target angle and the current angle correspond each other when the actuator inferiorly follows a move of the steering wheel and the steering wheel is operated in reverse.

2. A variable gear ration system according to Claim 1; wherein a feedback value of the current and the target angle for feedback control are held at a start of a reverse operation of the steering wheel, from the start of the reverse operation of the steering wheel to a timing that the target angle and the current angle correspond each other when the actuator inferiorly follows a move of the steering wheel and the steering wheel is operated in reverse.

3. A variable gear ration system comprising:
an actuator connected to a steering system of an automobile;
a sensor for detecting a current angle of the actuator; and
a controller for executing a position control of the actuator based on a target angle determined in accordance with a operational state including a steering angle of a steering wheel and a vehicle speed so that a output position of the actuator approach the target angle; wherein the variable gear ration system varying a steering angle of a vehicle wheel relative to the steering angle of the steering wheel depending on a operational state; and wherein
an output torque of the actuator is held at a start of a reverse operation of the steering wheel, from the start of the reverse operation of the steering wheel to a timing that the target angle and the current angle correspond each other when the actuator inferiorly follows a move of the steering wheel and the steering wheel is operated in reverse.

4. A variable gear ration system comprising:
an actuator connected to a steering system of an automobile;
a sensor for detecting a current angle of the actuator; and
a controller for executing a feedback control based on the current angle of the actuator and a target angle determined in accordance with a operational state including a steering angle of a steering wheel and a vehicle speed so that a output position of the actuator approach the target angle; wherein the variable gear ration system varying a steering angle of a vehicle wheel relative to the steering angle of the steering wheel depending on a operational state; and wherein
an output of the actuator is locked from the start of the reverse operation of the steering wheel to a timing that the target angle and the current angle correspond each other when the actuator inferiorly follows a move of the steering wheel and the steering wheel is operated in reverse.

5. A variable gear ratio system according to Claim 4, wherein the lock includes a mechanical lock.

6. A variable gear ratio system according to Claim 4, wherein the lock includes an electric lock.
